(19) Europäisches Patentamt
European Patent Office
Office européen des brevets

(11) Publication number: **0 055 085 A1**

(12) # EUROPEAN PATENT APPLICATION

(21) Application number: **81305928.4**

(22) Date of filing: **17.12.81**

(51) Int. Cl.³: **C 08 G 73/16**, C 09 D 3/70, C 09 D 5/25, H 01 B 3/30

(30) Priority: **14.10.81 US 311386**
**23.12.80 US 220160**

(43) Date of publication of application: **30.06.82 Bulletin 82/26**

(84) Designated Contracting States: **AT CH DE FR GB IT LI SE**

(71) Applicant: **SCHENECTADY CHEMICALS INC., Post Office Box 1046, Schenectady New York 12301 (US)**

(72) Inventor: **Shen, Dennis C., 32 Hills Road, Ballston Lake New York 12019 (US)**

(74) Representative: **Lawrence, Peter Robin Broughton et al, Gill, Jennings & Every 53-64 Chancery Lane, London WC2A 1HN (GB)**

(54) **Polyester imides and coating compositions and electrically insulated coatings formed from them.**

(57) Novel polyester imides are provided that can be formulated as wire coating enamels and can provide a highly heat resistant coating on wire or other electrical conductors. In the polyester imides
(a) the imide group in the polyester imide are derived mainly from the imide dibasic acid of the formula

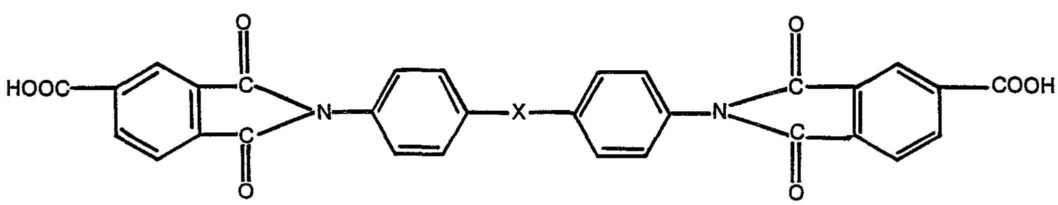

where X is O or $CH_2$, and the polyester imide contains from 40 to 50 equivalent % of imide groups;
(b) the polyester imide has a hydroxy:carboxy equivalent ratio of 2.65:1 to 4.0:1;
(c) the mole percent of the ingredients from which the polyester imide is derived are

| | Mol % |
|---|---|
| dihydric alcohol | 29-56 |
| trihydric alcohol | 9-19 |
| aromatic diamine | 11-18 |
| trimellitic anhydride | 22-35 |
| aromatic diacid or diester | 0-7 |

and the mole ratio trimellitic anhydride:aromatic diamine is substantially 2:1 and the mole ratio trihydric alcohol:dihydric alcohol is in the range 0.23:1 to 0.62:1;
(d) the dihydric alcohol is mainly either ethylene glycol or a mixture of ethylene glycol and a minor amount of another alkanediol, the trihydric alcohol is mainly tris(2-hydroxyethyl) isocyanurate, the aromatic diamine is mainly methylene dianiline or oxydianiline, and the aromatic diacid is terephthalic acid and the aromatic diester is a di(lower alkyl) terephthalate;
(e) the polyester imide has a molecular weight in the range 700 to 2,000; and
(f) the polyester imide has a hydroxyl number in the range 350 to 450.

EP 0 055 085 A1

SCHENECTADY CHEMICALS INC
GJE 6081/235

# POLYESTER IMIDES AND COATING COMPOSITIONS AND ELECTRICALLY INSULATED COATINGS FORMED FROM THEM

It is well known that polyester imides are useful in the formation of electrically insulating coatings on wires and other conductors. Two polyester imides that have been used commercially on a large scale are the product sold under the trade mark Isomid, which is made in accordance with US Patent No. 3,426,098 and the product sold under the trade mark Terebec FH, which is made in accordance with US Patent No. 3,697,471. Terebec FH contains substantial amounts of ester derived from terephthalic acid and a small amount of imide derived from the diimide dicarboxylic acid formed by reacting 2 moles of trimellitic anhydride with one mole of methylene dianiline. This diimide is often referred to herein as DID.

Although the products made in accordance with these patents have good heat resisting properties compared to many other wire coating resins they are still not entirely satisfactory in practice. Thus with regard to heat shock of Terebec FH and Isomid the percent passing one-half hour at 200°C using 20% prestretch at different mandrel sizes is as follows:-

| Mandrel Size | Terebec FH | ISOMID |
|---|---|---|
| 1X | 30 | 0 |
| 2X | 50 | 80 |
| 3X | 60 | 100 |
| 4X | 90 | 100 |

This shows that Terebec FH has inferior heat shock properties to Isomid at 200°C. However when Isomid is tested at 260°C the results at the same mandrel sizes are 0-0-0-0. This indicates that even Isomid has unsatisfactory heat shock properties at 260°C.

Polyester imides such as those discussed above are often applied as the base coat or only coat in the insulation on an electrical conductor. However it is also known to use polyester imide resins as the top coat for electrically conductors coated with a base coat of a polyester resin or other resin. For instance a polyester imide resin top coat that is curable, but which still has rather poor heat shock properties, is described in US Patent No. 4,208,464. In US Patent Nos. 4,070,524, 4,012,556, 4,012,555 and US 3,944,706 polyester imide resin top coats are described that are softenable and bondable and which can thus be used as self-bonding coating for magnet wires. Thermobonding and high heat resistance are mutually exclusive properties and so such coatings do not have good heat shock properties.

The present invention is based on the discovery that it is possible to obtain improved properties, and in particular improved heat shock properties, in a polyester imide derived from a dihydric alcohol, a trihydric alcohol, an aromatic diamine, trimellitic anhydride and optionally an aromatic diacid or diester if the polyester imide is derived from particular proportions of particular ingredients. Thus in the invention it is necessary that

(a) the imide groups in the polyester imide are derived mainly from the imide dibasic acid of the formula

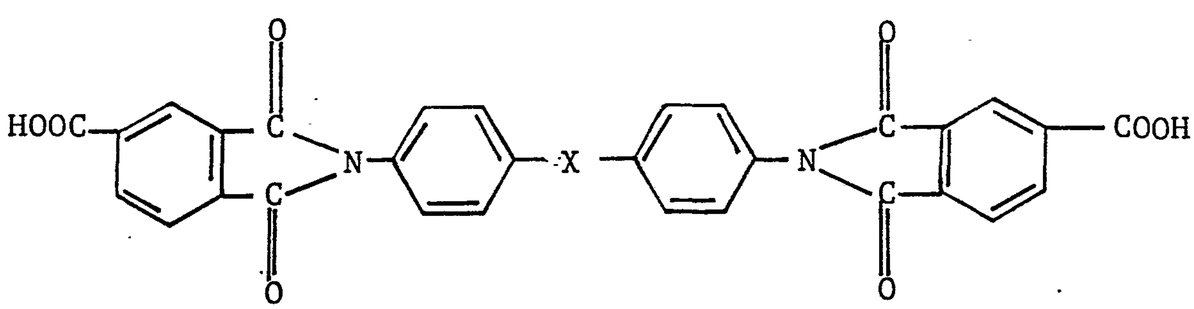

where X is O or $CH_2$, and the polyester imide contains from 40 to 50 equivalent % of imide groups;

(b) the polyester imide has a hydroxy:carboxy equivalent ratio of 2.65:1 to 4.0:1;

(c) the mole percent of the ingredients from which the polyester imide is derived are

| | Mol % |
|---|---|
| dihydric alcohol | 29-56 |
| trihydric alcohol | 9-19 |
| aromatic diamine | 11-18 |
| trimellitic anhydride | 22-35 |
| aromatic diacid or diester | 0- 7 |

and the mole ratio trimellitic anhydride:aromatic diamine is substantially 2:1 and the mole ratio trihydric alcohol: dihydric alcohol is in the range 0.23:1 to 0.62:1;

(d) the dihydric alcohol is mainly either ethylene glycol or a mixture of ethylene glycol and a minor amount of another alkanediol, the trihydric alcohol is mainly tris(2-hydroxyethyl) isocyanurate, the aromatic diamine is mainly methylene dianiline or oxydianiline, and the aromatic diacid is terephthalic acid and the aromatic diester is a di(lower alkyl) terephthalate;

(e) the polyester imide has a molecular weight in the range 700 to 2,000; and

(f) the polyester imide has a hydroxyl number in the range 350 to 450.

By the invention one can form polyester imide coatings having improved heat shock properties and in particular it is possible to form a single coat insulating coating on an electrical wire capable of withstanding heat shock at 260°C.

The imide content of the polyester imide is expressed by

$$\frac{\text{Imide equivalents}}{\text{Imide equivalents + Ester equivalents}}$$

The polyester imide is preferably made with 42.5 to 50%, most preferably 45 to 50%, by equivalent, imide groups.

The hydroxyl:carboxyl equivalent ratio is

preferably in the range 2.65:1 to 3.67:1, most preferably 2.65:1 to 3.33:1. The trihydric alcohol:dihydric alcohol molar ratio is preferably in the range 0.4:1 to 0.5:1.

The polyester imide preferably has an average molecular weight of from 700 to 1300, most preferably 750 to 1050. The molecular weights herein are the values determined by Vapour Pressure Osmometer.

The hydroxyl number of the polyester imide is generally in the range 380 to 420.

The polyester imides of the invention are low molecular weight thermosetting resins generally having an acid value between 0 and 10.

If the ingredients from which the polyester imide is derived include an aromatic diester this is preferably dimethyl terephthalate, diethyl terephthalate or dibutyl terephthalate.

The polyester imides can be made by reacting together the individual materials listed above or by preforming the imide dibasic acid by reaction between the diamine and trimellitic anhydride. The molar quantities identified herein are calculated on the basis of the molar proportions of the starting materials before any such prereaction. Thus if the polyester imide is formed by use of one mole DID this is treated, for the purposes of calculations herein, as being formed from 2 moles trimellitic anhydride and 1 mole aromatic diamine.

Since the amine and trimellitic anhydride combine either previously or in the polyester imide to form the imide dibasic acid of the formula given above it will be appreciated that the carboxyl equivalents identified in the hydroxy to carboxy equivalent ratio are the free carboxyl groups present in the diimide.

Methylene dianiline and oxy dianiline are examples of preferred aromatic diamines and ethylene glycol is an example of a preferred dihydric alcohol for use in the invention.

The ingredients from which the polyester imide is derived preferably consists only of the ingredients named above but minor amounts of other ingredients within the defined classes, and minor amounts of other classes of ingredients, may be incorporated provided they do not significantly impair the properties of the polyester imide. In general however it is very desirable to use the stated materials alone. Thus, replacing THEIC by trimethylol propane or glycerine does not give a good results nor does replacing terephthalic acid by isophthalic acid or adipic acid as the other acid when less than 100% DID is used as the acid component. Likewise, replacing ethylene glycol with propylene glycol or 1,4-butanediol does not give as good results nor does including 1,2,3,4-butane tetracarboxylic anhydride as part of the acid. While it is preferable to employ ethylene glycol as the sole dihydric alcohol, it is possible to replace a minor portion of the ethylene glycol by another dihydric alcohol, e.g., an alkanediol, such as 1,4-butylene glycol. For example, there can be used an ethylene glycol-butylene glycol ratio of 75:25. The aromatic diamine is preferably methylene dianiline.

The polyester imide may be made by heating the dihydric alcohol, trihydric alcohol, optionally aromatic diacid or diester and either aromatic diamine and trimellitic anhydride or preformed imide dibasic acid in an organic solvent until the polyester imide is formed. Thus the polyester imide can be cooked at 70-100% concentration in various kinds of solvent media, such as cresylic acid, n-methyl pyrrolidone, ethylene glycol, monomethyl ether of diethylene glycol or a mixture of 50% cresylic acid and 50% ethylene glycol.

Coating compositions according to the invention comprise a solution of the polyester imide in a solvent. The solvent may be a non-aqueous organic solvent or an aqueous solvent that includes sufficient amine to solubilise the polyester imide in the aqueous solvent. An advantage of the resins is that they are soluble in a wide variety

of solvents including phenol, cresol or cresylic acid or other phenols or mixtures of phenols. They are preferably dissolved in a mixture of solvent containing 29-59% of cresylic Acid 43 (Merichem Co.), 12-19% of phenol, 17-38% of Solvesso 100 (a mixture of tetramethyl benzene with dialkyl- and trialkyl-benzene boiling in the range 182-204°C) or Solvesso 150 (a blend of 70% Solvesso 100 and 30% heavy aromatic naphtha). Solvesso is a trade mark. The solvent can be a mixture of 0-60% water, 0-28% N-methyl pyrrolidone, 0-17% ethylene glycol and 12-89% methyl Carbitol. To solubilise these polyester imides in water, various amines may be employed that react with the free carboxylic groups or amic acid groups available to form the salts that are soluble in water. These amines may be of the alkyl- and alkanolamines such as trimethylamine, triethylamine, triethanolamine, dimethylethanolamine, methyldiethanolamine. A sufficient quantity of amine is employed to raise the pH of the aqueous solution to a range of 7-9 and preferably 7.5-8.5.

There can be added to the wire enamels of the invention conventional modifiers such as tetraisopropyltitanate such as that sold under the trade mark Tyzor TPT, tetrabutyltitanate, such as Tyzor TBT, tetraphenyltitanate and tetracresyltitanate, as well as polyisocyanates, such as the cyclic trimer of 2,4 and 2,6-tolylene diisocyanates having the three free isocyanate groups blocked by phenol, and which is sold under the trade mark Mondur SH. Alternately there can be used any of the other polyisocyanates mentioned in US Patent 3,426,098, or cresol, or metal driers,e.g. cobalt naphthenate, manganese naphthenate, calcium naphthenate, zinc octoate and Polycat 200 (trade mark). There can be used other titanate and driers, e.g. any of those mentioned in U.S. Patent 4,119,608. Also there can be added to the enamel phenolic resins such as phenolformaldehyde or cresol-formaldehyde resins.

Electrical conductors according to the invention carry insulation comprising a coating formed by applying

and curing a coating composition containing the polyester imide. The conductor is preferably a wire. The polyester imide coating may be formed direct onto the conductor, i.e. as a base coating. It may be formed by one or more applications of coating composition. The composition, often known as a wire enamel, can for instance be applied to copper, aluminium, silver or other wires using conventional coating procedures and wire speeds, e.g. 30-60 ft./min. and curing the wire is carried out at conventional temperatures, e.g. 260°C to 482°C, usually 260-427°C.

The resultant coatings have improved heat shock properties compared to, for instance, Terebec FH and Isomid and in particular can be capable of withstanding heat shock at 260°C, compared to the 200°C of the commercial Isomid. The new polyester imide can compete, as a single coat system, against the amide-imide top coated polyesters now used in the art, for instance the coatings formed by applying an amide-imide coating over a polyester such as the polyester sold under the trade mark Isonel 200. The new polyester imides can be formulated to have other physical properties that are satisfactory, for instance to pass the AO Smith Blister Test and to have good burnout results.

The polyester imides of the invention are also useful where the insulation on the conductor comprises a top coating of the said polyester imide over a base coat of another polyester imide or a polyester resin, and again coated wires having good heat shock properties can be obtained.

Prior to the invention the normal procedure has been to apply four coats of a polyester base coat, for instance Isonel 200 prepared from tris(2-hydroxyethyl)-isocyanurate, ethylene glycol and terephthalic acid followed by two coats of an amide-imide polymer using N-methyl pyrrolidone as solvent. In the invention good results can be obtained using one or two coats of the novel polyester imide as top coat over a base coat

of the described or other polyester or of a different polyester imide. This can be achieved without the need for using N-methyl pyrrolidone as a solvent and lower cost solvents can be used. Also the enamel can be operated at higher solids content, e.g. 40%, with consequential reduced amounts of solvent being lost. Thus the improved results can be achieved at lower costs than using conventional amide-imide polymer top coats.

The base coat over which the new polyester imide is applied may be a high temperature polyester, such as described in US Patent No. 3,342,780, or a high temperature conventional polyester imide, such as described in US Patent No. 3,426,098. Examples of suitable polyester resins are the reaction products of tris(2-hydroxyethyl) isocyanurate (THEIC), ethylene glycol and terephthalic acid or isophthalic acid. For Class F enamels, the THEIC in the base coat can be replaced by glycerine, trimethylolpropane or trimethylolethane.

Examples of suitable polyester imide resin base coats are the reaction product of THEIC, ethylene glycol, terephthalic acid (or isophthalic acid), methylene dianiline (or oxydianiline) and trimellitic anhydride. Glycerine can be used in place of THEIC, for instance in accordance with US Patent No. 3,697,471. Similarly diethylene glycol or triethylene glycol monoether modified polyester imide resins as described in US Patent No. 4,119,608 may be used.

All parts and percentages are by weight unless otherwise specified. In the following examples the viscosity is recorded as the Gardner-Holdt viscosity, for example as described in Gardner and Sward "Paint Testing Manual, Physical and Chemical Examination, Paints, Varnishes, Lacquers and Colours" 12th Edition 1962 pages 171 to 173. In the examples the following abbreviations are used:

EG = ethylene glycol
TA = terephthalic acid
DMT = dimethyl terephthalate

TMA = trimellitic anhydride

THEIC = tris(2-hydroxyethyl)isocyanurate

MDA = methylene dianiline

NMP = N-methyl pyrrolidone

TPT = tetraisopropyltitanate

DID = diimide diacid (adduct of 1 mol of MDA and 2 moles of TMA)

Tyzor TE = triethanolamine titanium chelate.

CA-43 is a product obtained from Merichem Co. and which has the following approximate composition

| Component | % by Weight |
|---|---|
| Phenol | 6 - 8 |
| O-cresol | 9 - 10 |
| M-cresol | 15 - 20 |
| P-cresol | 8 - 11 |
| O-Ethylphenol | 1 - 3 |
| M-Ethylphenol | 9 - 11 |
| P-Ethylphenol | 3 - 5 |
| 2,6-Dimethylphenol | 1 |
| 2,4-Dimethylphenol<br>2,5-Dimethylphenol | 11 - 17 |
| 2,3-Dimethylphenol<br>3,5-Dimethylphenol | 10 - 13 |
| 3,4-Dimethylphenol | 5 - 8 |
| 2,4,6-Trimethylphenol | 1 |

Example 1a

A polymer was made using the following materials

| | Reactants | Weight Grams | Mols | Mol % of Total Reactants |
|---|---|---|---|---|
| A) | CA-43 | 321.9 | - | - |
| B) | EG | 230.7 | 3.72 | 33.7 |
| C) | THEIC | 440.8 | 1.69 | 15.3 |
| D) | TMA | 721.0 | 3.76 | 34.0 |
| E) | MDA | 371.9 | 1.88 | 17.0 |

The polyester imide was made with hydroxyl/carboxyl ratio of 3.33:1, triol/diol molar ratio of 0.45:1 and 50% imide content (equivalent). Materials A, B, C, D and E were charged into a 3-litre, three-necked flask equipped

with an agitator driven by an electronically-controlled motor, thermometer for flask, 3-bubble Snyder fractionating column and water-cooled condenser. The temperature was increased gradually to 220-230°C and held there until the desired physicals were attained. At a viscosity of X (Gardner-Holdt) as measured at 38% solids in cresylic acid the reaction was terminated, and the melt discharged into a pan to solidify. The solids of the resin were 86.7% Molecular Weight of the polymer was 987.

Example 1b

A wire enamel was prepared from the following ingredients

| | Weight Grams |
|---|---|
| A) The polyester imide prepared in Example 1a) | 369.1 |
| B) CA-43 | 120.7 |
| C) Phenol | 90.5 |
| D) Solvesso 100 | 172.4 |
| E) Phenolic Resin (m, p, Cresol-formaldehyde resin-% by weight dissolved in CA-43) | 36.6 |
| F) TPT | 12.2 |
| G) Blocked Isocyanate (Mondur SH-% by weight dissolved in CA-43 and Solvesso 100) | 70.4 |
| H) Ethylene Glycol | 17.0 |

A solution of the polymer 1a was made by dissolving the resin in (B), (C) and (D) and holding the mixture at 120°C with agitation until it was dissolved. The solution was cooled to 88°C and (E), (F) and (G) were added. The solution was then heated to 120°C and held for two hours. The viscosity of the resulting wire enamel was a V 3/4 and the solids were determined to be 39.2%.

Example 1c

A wire enamel was prepared by repeating the process of Example 1b but using the following ingredients

| | Weight Grams |
|---|---|
| A) The polyester imide prepared in Example 1a | 262.4 |
| B) CA-43 | 247.0 |
| C) Phenol | 109.8 |

| | | Weight Grams |
|---|---|---|
| D) | Solvesso 150 | 82.3 |
| E) | Solvesso 100 | 109.8 |
| F) | Phenolic Resin | 29.6 |
| G) | TPT | 10.0 |
| H) | Blocked Isocyanate | 63.1 |

The viscosity of this enamel was an E and the solids were determined to be 28.4%.

Example 1d

A wire enamel was obtained by repeating the process of Example 1b but using the following ingredients

| | | Weight Grams |
|---|---|---|
| A) | The polyester imide prepared in Example 1a | 262.4 |
| B) | CA-43 | 238.8 |
| C) | Phenol | 106.1 |
| D) | Solvesso 150 | 79.6 |
| E) | Solvesso 100 | 106.1 |
| F) | Phenolic Resin | 17.4 |
| G) | TPT | 6.4 |
| H) | Blocked Isocyanate | 40.3 |

The viscosity of this enamel was a D 3/4 and the solids were determined to be 28.3%.

Example 2a

A polymer was made using the technique of Example 1a but from the following ingredients

| | Reactants | Weight Grams | Mols | Mol % of Total Reactants |
|---|---|---|---|---|
| A) | CA-43 | 330.2 | - | - |
| B) | EG | 232.5 | 3.75 | 35.4 |
| C) | THEIC | 440.6 | 1.69 | 16.0 |
| D) | TMA | 657.6 | 3.43 | 32.4 |
| E) | MDA | 339.1 | 1.71 | 16.2 |

The polyester imide was made with imide content of 50 eq. % and a hydroxyl/carboxyl ratio of 3.67. After a viscosity of U 1/2 was attained, the resin was discharged into a pan to solidify. The solids were determined to be 82.7%. The molecular weight of the

polymer was 1082.

Example 2b

A wire enamel was made by the method of Example 1b modified by the use, as component A, of 386.8 grams of the product of Example 2a. The viscosity of the enamel was U and the solids were determined to be 40.3%.

Example 3a

A polymer was made by the method of Example 1a modified by the use of the materials

| | Reactants | Weight Grams | Mols | Mol % of Total Reactants |
|---|---|---|---|---|
| A) | CA-43 | 358.7 | - | - |
| B) | EG | 319.7 | 5.16 | 41.0 |
| C) | THEIC | 309.3 | 1.19 | 9.4 |
| D) | TMA | 799.8 | 4.17 | 33.1 |
| E) | MDA | 412.4 | 2.08 | 16.5 |

The triol/diol molar ratio was 0.23:1 and imide content 50 eq. %. A viscosity of U 1/2 and 79.6% solids were obtained for this polymer. The molecular weight of the polymer was 1290.

Example 3b

A wire enamel was made by the method of Example 1b modified by the use, as component A, of 401.6 grams of the product of Example 3a. The viscosity of the resulting enamel was U 1/2 and the solids were determined to be 40.2%.

Example 4a

A polymer was made by the method of Example 1a modified by the use of the materials

| | Reactants | Weight Grams | Mols | Mol % of Total Reactants |
|---|---|---|---|---|
| A) | CA-43 | 394.8 | - | - |
| B) | EG | 286.0 | 4.61 | 34.9 |
| C) | THEIC | 542.1 | 2.08 | 15.7 |
| D) | TMA | 806.4 | 4.20 | 31.8 |
| E) | MDA | 415.8 | 2.10 | 15.9 |
| F) | TA | 36.5 | 0.22 | 1.7 |

The polyester imide had 47.5 equivalent % imide content. This polymer had a viscosity of V and a solids of 86.0%. The molecular weight was 1541.

Example 4b

A wire enamel was made by the method of Example 1b modified by the use, as component A, of 371.7 grams of the product of Example 4a. This enamel had a viscosity of T 3/4 and a solids content of 38.8%.

Example 5a

A polymer was made by the method of Example 1a modified by the use of the materials

| | Reactants | Weight Grams | Mols | Mol % of Total Reactants |
|---|---|---|---|---|
| A) | CA-43 | 321.9 | - | - |
| B) | EG | 251.7 | 4.06 | 36.0 |
| C) | THEIC | 475.1 | 1.82 | 16.2 |
| D) | TMA | 641.3 | 3.34 | 29.7 |
| E) | MDA | 330.7 | 1.67 | 14.8 |
| F) | TA | 61.0 | 0.37 | 3.3 |

The polymer imide had 45 equivalent percent imide content and the final polymer had a viscosity of V 1/4 and a solids of 85.5%.

Example 5b

A wire enamel was made by the method of Example 1b using the products of Example 5a instead of Example 1a. A viscosity of T 3/4 and solids of 39.4% were obtained.

Example 6a

A polymer was made by the method of Example 1a modified by the use of the materials

| | Reactants | Weight Grams | Mols | Mol % of Total Reactants |
|---|---|---|---|---|
| A) | CA-43 | 347.9 | - | - |
| B) | EG | 278.9 | 4.50 | 32.1 |
| C) | THEIC | 529.1 | 2.03 | 14.5 |
| D) | TMA | 894.7 | 4.66 | 33.2 |
| E) | MDA | 461.3 | 2.33 | 16.6 |
| F) | TA | 85.0 | 0.51 | 3.6 |

This polyester imide had 45 equivalent % imide content and OH/COOH ratio of 2.65. It was controlled to a final viscosity of X and a solids of 88.0%.

Example 6b

A wire enamel was made by the method of Example 1b modified by the use, as component A, of 363.3 grams of the product of Example 6a. A viscosity of V and a solids of 40.0% were obtained.

Example 7a

A polymer was made by the method of Example 1a modified by the use of the materials

| | Reactants | Weight Grams | Mols | Mol % of Total Reactants |
|---|---|---|---|---|
| A) | CA-43 | 149.3 | - | - |
| B) | EG | 184.8 | 2.98 | 40.6 |
| C) | THEIC | 222.4 | 0.852 | 11.6 |
| D) | TMA | 384.0 | 2.0 | 27.3 |
| E) | MDA | 198.0 | 1.0 | 13.6 |
| F) | TA | 83.0 | 0.5 | 6.8 |

This polyester imide had 40 equivalent % imide content, OH/COOH ratio of 2.84 and triol/diol molar ratio of 0.29. It was controlled to a final viscosity of U 1/2 and solids of 82.6%. The molecular weight of the polymer was 773.

Example 7b

A wire enamel was made by the method of Example 1b modified by the use, as component A, of 387 grams of the product of Example 7a. A viscosity of U 1/4 and solids of 40% were obtained.

Example 8a

A polymer was made by the method of Example 1a modified by the use of N-methyl pyrrolidone in place of cresylic acid as solvent medium. It was reacted to a viscosity of W at 38% solids in cresylic acid and a solids of 82.5%.

Example 8b

A conventional, organic, wire enamel was made by the method of Example 1b modified by the use, as

component A, of 364.5 grams of polymer 8a. A viscosity of X 1/2 and a solids of 40.3% were obtained.

Example 8c

This example shows the preparation of an aqueous wire enamel. The hard resin from Example 8a was fractured into small chunks, and 472.7 grams of the polymer along with 39.1 grams of monomethyl ether of diethylene glycol was charged to a 3-litre, three-necked roundbottom flask, and heated to 132°C until the polymer was fluid and dissolved. At a temperature of 120°C, 46.8 grams of dimethylethanolamine (DMEA) was added to the flask. Then the batch was cooled to 105°C, 182.1 grams of distilled water was added to the flask. Additional water, amine and solvent were added to reduce the viscosity. Then on a solids-to-solids basis 5.5% Tyzor TE was added to the solution to make the final enamel having a viscosity of X 1/4, a pH of 8 and a solids of 47.6%.

Example 9a

A polymer was made by the method of Example 1a modified by the use of monomethyl ether of diethylene glycol in place of cresylic acid as the solvent medium. It was reacted to a viscosity of V 1/4 at 38% in cresylic acid and a solids content of 80.9%.

Example 9b

A conventional, organic, wire enamel was made by the method of Example 1b modified by the use, as component A, of 395.4 grams of the product of Example 9a. A viscosity of T 1/2 and a solids content of 40.7% were obtained.

Example 9c

An aqueous wire enamel was prepared using the general procedure and apparatus described in Example 8c. Thus 481.9 grams of the product of Example 9a were blended with 29.9 grams of monomethyl ether of diethylene glycol, 66.8 grams of DMEA, 182.6 grams of distilled water and 21.9 grams of Tyzor TE to provide an enamel having the following properties: viscosity =

X 1/2, pH = 7.5, % solids = 53.0%.

Example 10a

A polymer was made by the method of Example 1a except that ethylene glycol was used in place of cresylic acid as the solvent medium and the reactants were

| | Reactants | Weight Grams | Mols | Mol % of Total Reactants |
|---|---|---|---|---|
| A) | EG | 552.6 | 8.91 | 54.9 |
| B) | THEIC | 440.8 | 1.69 | 10.4 |
| C) | TMA | 721.0 | 3.76 | 23.2 |
| D) | MDA | 371.9 | 1.88 | 11.6 |

It was reacted to a viscosity of X 3/4 at 38% solids in cresylic acid and a solids content of 88.7%.

Example 10b

An organic wire enamel was made by the method of Example 1b modified by the use, as Component A, of 360.8 grams of the product of Example 10a. A viscosity of T and a solids of 41% were obtained.

Example 10c

An aqueous wire enamel was made using the apparatus and method of Example 8c by blending 439.7 grams of the produce of Example 10a, 72.1 grams of monomethyl ether of diethylene glycol, 66.8 grams of DMEA, 182.6 grams of distilled water and 21.9 grams of Tyzor TE to provide an enamel having the following properties: viscosity = Y, pH = 7.5, and % solids = 48.6%.

Example 11a

A polymer was made by the method of Example 1a modified by the use of the materials

| | Reactants | Weight Grams | Mols | Mol % of Total Reactants |
|---|---|---|---|---|
| A) | CA-43 | 318.4 | - | - |
| B) | EG | 249.0 | 4.02 | 36.1 |
| C) | THEIC | 471.8 | 1.81 | 16.2 |
| D) | TMA | 634.5 | 3.30 | 29.6 |
| E) | MDA | 327.3 | 1.65 | 14.8 |
| F) | DMT | 71.4 | 0.368 | 3.3 |

| Reactants | Weight Grams | Mols | Mol % of Total Reactants |
|---|---|---|---|
| G) Xylol | | | |

It was controlled to a viscosity of U 1/4 at 38% in cresylic acid and a solids of 81.6%. The molecular weight of the polymer was 1481.

Example 11b

A wire enamel was made by the method of Example 1b modified by the use, as component A, of 391.8 grams of the product of Example 11a. A viscosity of U 1/2 and a solids of 40.5% were obtained.

Example 12a

A polymer was made by the method of Example 1a modified by the use of the materials

| | Reactants | Weight Grams | Mols | Mol % of Total Reactants |
|---|---|---|---|---|
| A) | CA-43 | 63.8 | - | - |
| B) | EG | 45.7 | 0.737 | 51.1 |
| C) | THEIC | 87.3 | 0.334 | 23.1 |
| D) | DID | 203.2 | 0.372 | 25.8 |

It was reacted to a viscosity of U 3/4 at 38% in cresylic acid and a solids of 84.8%. The molecular weight of the polymer was 1967. It should be noted that in this Example DID is used in place of MDA and TMA. The figure of 23.1% THEIC in this Example based on EG, THEIC and DID is equivalent to a figure of 15.3% based on EG, THEIC, MDA and TMA and thus is within the range of 9 to 19 mol % required in the invention.

Example 12b

A wire enamel was made by the method of Example 1b modified by the use, as component A, of 377.4 grams of the product of Example 12a. A viscosity of U 3/4 and a solids of 39.2% were obtained.

Example 13a

A polymer was made using the materials

| | Reactants | Weight Grams | Mols | Mol % of Total Reactants |
|---|---|---|---|---|
| A) | CA-43 | 321.9 | - | - |
| B) | EG | 230.7 | 3.72 | 33.7 |
| C) | THEIC | 440.8 | 1.69 | 15.3 |
| D) | TMA | 721.0 | 3.76 | 34.0 |
| E) | MDA | 371.9 | 1.88 | 17.0 |
| F) | Cobalt Naphthenate | 24 ppm* | | |
| G) | Calcium Naphthenate | 96 ppm* | | |
| H) | Manganese Naphthenate | 72 ppm* | | |

* Based on total solids of the batch

The same equipment and procedure as outlined in Example 1a was employed in preparing this polymer except metal driers, F), G) and H) were added. It was reacted to a viscosity of X 1/4 at 38% solids in cresylic acid and a solids of 86.1%.

Example 13b

A wire enamel was made by the method of Example 1b modified by the use, as component A, of 371.7 grams of the product of Example 13a. A viscosity of V 1/2 and a solids of 41.4% were obtained.

Example 14a

A polymer was made by the method of Example 1a modified by the use of 9.25 mols (573.2 grams) ethylene glycol so that the mol % of reactants were 55.8 EG, 10.2 THEIC, 22.7 TMA and 11.3 MDA. It was controlled to a final viscosity of U 3/4 and a solids of 82.6%.

Example 14b

A wire enamel was made by the method of Example 1b modified by the use, as component A of 387.4 grams of the product of Example 14a. A viscosity of U and a solids of 41.6 were obtained for this enamel.

In each of the examples the percent solids of the polymer and enamel solutions were determined using 2 gram samples in a forced air oven held at 200°C for 2 hours.

Many of the described enamels were applied to 18 gauge copper wire in conventional manner at room temperature. They were baked on in a conventional manner at 260-480°C. The heat shock was tested at 260°C for ½ hour at 20% prestretch and the percent that passed were recorded. Table 1 shows the properties obtained.

Table 1

| Example | Wire Speed Metres/Min. | Appear. | Mandrel After Snap | Cut Thru °C | 260°C Heat Shock 1X 2X 3X 4X |
|---|---|---|---|---|---|
| 1(b) | 14 | 3 | 2X | 370 | 80-90 -100-100 |
| 1(b) | 15.5 | 3 | 1X | 355 | 60-90 -100-100 |
| 1(b) | 17 | 3 | 1X | 340 | 90-100-100-100 |
| 1(b) | 18.5 | 3 | 1X | 280 | 80-100-100-100 |
| 1(c) | 15.5 | 4 | 1X | 355 | 70-80 -100-100 |
| 1(d) | 15.5 | 4 | 1X | 360 | 80-100-100-100 |
| 2(b) | 15.5 | 3 | 1X | 355 | 60-70 -90 -100 |
| 3(b) | 15.5 | 3 | 1X | 325 | 70-90 -100-100 |
| 4(b) | 15.5 | 3 | 1X | 375 | 70-80 -100-100 |
| 5(b) | 14 | 3 | 1X | 370 | 30-80 -100-100 |
| 6(b) | 15.5 | 3 | 1X | 360 | 40-80 -100-100 |
| 7(b) | 15.5 | 3 | 1X | 360 | 50-80 -90 -100 |
| 8(b) | 15.5 | 4 | 1X | 320 | 10-80 -90 -100 |
| 8(c) | 15.5 | 3 | 1X | 295 | 50-80 -100-100 |
| 9(b) | 15.5 | 4 | 1X | 350 | 50-90 -100-100 |
| 9(c) | 15.5 | 4 | 1X | 290 | 10-80 -100-100 |
| 10(b) | 14 | 3 | 1X | 365 | 10-70 -90 -100 |
| 13(b) | 14 | 3 | 1X | 385 | 30-90 -100-100 |
| 14(b) | 15.5 | 4 | 1X | 355 | 50-80 -90 -100 |

Table 1 continued

| Example | Unidirect. Scrape | Burn Out(sec) | Freon Resist. | Dissipation Factor(240°C) | Build (mils) |
|---|---|---|---|---|---|
| 1(b) | 1000-1410 | 465 | | 2.34 | 2.8 |
| 1(b) | 1100-1116 | 417 | OK-OK | 3.29 | 2.8 |
| 1(b) | 1100-1416 | 410 | | 3.89 | 2.8 |
| 1(b) | 1166-1283 | 427 | | 3.49 | 2.9 |
| 1(c) | | | | | 3.0 |
| 1(d) | | | | | 3.0 |
| 2(b) | 1250-1400 | | | | 2.8 |
| 3(b) | | | | | 2.9 |
| 4(b) | | | | | 2.9 |
| 5(b) | 1000-1000 | | | | 2.9 |
| 6(b) | 1200-1416 | | | | 3.0 |
| 7(b) | 1000-1500 | | | | 3.0 |
| 8(b) | | | | | 3.0 |
| 8(c) | 1300-1466 | | | | 2.9 |
| 9(b) | 1000-1250 | | | | 2.9 |
| 9(c) | 1000-1216 | | | | 2.9 |
| 10(b) | 1100-1450 | 475 | | 3.62 | 3.0 |
| 13(b) | 1450-1450 | 459 | | 3.51 | 2.9 |
| 14(b) | | | | | |

To demonstrate the results obtainable when an enamel according to the invention is used as a top coat, wire was provided with either 4 or 5 coats of a base coat formed of Isonel 200 (a polyester formed from THEIC, ethylene glycol and terephthalate)and 1 or 2 top coats. In one test the top coat was formed of a material labelled AI and which is a polyamide-imide based on the following formulation:

| | | |
|---|---|---|
| N-methylpyrrolidone | (NMP) | 80.4 grams |
| Methylene diphenyl diisocyanate | (MDI) | 25.0 grams |
| Amyl alcohol | | 0.85 grams |
| Trimellitic anhydride | (TMA) | 19.1 grams |
| Solvesso 100 | | 34.3 grams |

These ingredients were cooked in conventional manner to produce an enamel solution having a viscosity range of X 1/2 - Y on the Gardner-Holdt scale at a solids content of 26.5-28.5% based on a two-gram sample that is baked for two hours in a forced air oven at 200°C.

In another test the topcoat is the material sold as Isomid based on the following formulation:

| | |
|---|---|
| Polyesterimide resin at 82.5% solids | 115.2 grams |
| Cresylic Acid | 177.4 grams |
| Solvesso 100 | 112.8 grams |
| Cresol formaldehyde resin at 40±2% solids | 15.1 grams |
| Tetra Isopropyl Titanate | 5.1 grams |
| Isocyanate resin at 40±2% solids, Mondur SH | 32.8 grams |
| 840 Silicone Resin | 0.35 grams |

The enamel solution was prepared in a conventional manner similar to that used in the other examples to give an enamel having a solids content of 26.5-28.5% and a viscosity of T 1/2 - U 1/2 on the Gardner-Holdt scale.

In another test the topcoat is provided by the enamel of Example 1b. The results were observed and are set out in Table 2 below.

The Freon blister test is developed by A.O. Smith & Co. and is conducted by preparing a coil using 5 ft of coated wire wound on a mandrel in accordance with an A.O. Smith specification to produce a 4 to 6% stretch on the wire. For 18 gauge wire this is a mandrel of 30 mm outer diameter. Coiled samples are prebaked for

2 hours at 150°C, removed and cooled. They are placed in a Freon (trade mark) bomb and charged with 1.5 pounds Freon 22. The bomb pressure is raised, by heating, to 600 psi and held for 6 hours, released and the coil immediately placed in an oven at 150°C for 4 hours. They are removed and checked for blistering. The samples fail according to the following: one large blister (in excess of wire diameter), two medium blisters (from one-half to one wire diameter) or five small blisters (less than half the wire diameter). A flexibility test is also run by wrapping a length of wire on a 5X mandrel for 10 turns. The film should not crack or peel. In addition, a twisted pair dielectric is run on the samples that pass the previous tests.

Table 2

| | |
|---|---|
| Top Coat | AI |
| No. of base coats | 4 |
| No. of top coats | 2 |
| Heat Shock | |
| 260°C | 80- 80- 90-100 |
| 220°C | 80-100-100-100 |
| 200°C | 80-100-100-100 |
| Windability (1500V) | Pass 24 |
| Freon Blister | Two large blisters Top coat loosened |
| Flex | Passes |
| Diel(kV) After | 16.5 |

Table 2 Continued...

Table 2 cont'd...



| Top Coat | ISOMID |
|---|---|
| No. of base coats | 4 |
| No. of top coats | 2 |
| Heat Shock | |
| 260°C | 0- 0- 0- 0 |
| 220°C | 0- 0- 0- 0 |
| 200°C | 60-80-90-100 |
| Windability (1500V) | Pass 20 |
| Freon Blister | Fails |
| Flex | Fails |
| Diel(kV) After | Fails |

Table 2 Cont'd...

| Top Coat | | Example 1b |
|---|---|---|
| No. of base coats | 4 | 5 |
| No. of top coats | 2 | 1 |
| Heat Shock | | |
| 260°C | 10- 50- 70- 80 | 10-20-40- 60 |
| 220°C | 30- 40- 70-100 | 70-80-90-100 |
| 200°C | 80- 100- 100-100 | 50-80-90-100 |
| Windability (1500V) | Pass 24 | Pass 13 |
| Freon Blister | Few Blisters | Fails |
| Flex | Passes | Fails |
| Diel(kV) After | 14.0 | Fails |

If there is compared the heat shock values at 200°C, it can be seen that all constructions are approximately equal in performance. However, as the temperature of heat shocking is raised to 220°C, the construction with the Isomid topcoat completely fails the test. The new polyesterimide covered passes a 4X mandrel at 220°C. At 220 and 260°C, it does not quite measure up exactly to the heat shock resistance of the AI/ISONEL construction, but offers acceptable performance at a much lower price. AI/ISONEL construction is based on a polyamideimide at approximately 22-28% solids using very expensive N-methyl-pyrrolidone as a solvent. The new polyester imide uses conventional cresylic acid/hydrocarbon solvent blends which are considerably cheaper, and employs considerably higher solids levels.

CLAIMS

1. A polyester imide derived from a dihydric alcohol, a trihydric alcohol, an aromatic diamine, trimellitic anhydride and optionally aromatic diacid or diester characterised in that

a) the imide group in the polyester imide are derived mainly from the imide dibasic acid of the formula

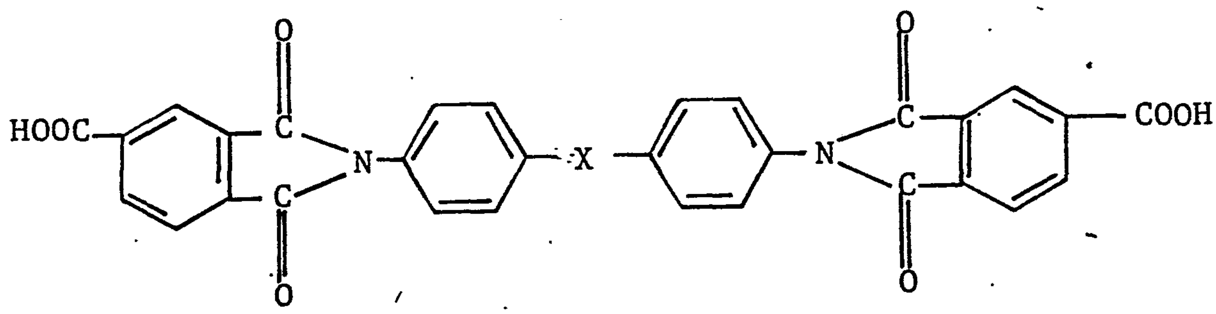

where X is O or $CH_2$, and the polyester imide contains from 40 to 50 equivalent % of imide groups;

(b) the polyester imide has a hydroxy:carboxy equivalent ratio of 2.65:1 to 4.0:1;

(c) the mole percent of the ingredients from which the polyester imide is derived are

| | Mol % |
|---|---|
| dihydric alcohol | 29-56 |
| trihydric alcohol | 9-19 |
| aromatic diamine | 11-18 |
| trimellitic anhydride | 22-35 |
| aromatic diacid or diester | 0- 7 |

and the mole ratio trimellitic anhydride:aromatic diamine

is substantially 2:1 and the mole ratio trihydric alcohol: dihydric alcohol is in the range 0.23:1 to 0.62:1;

(d) the dihydric alcohol is mainly either ethylene glycol or a mixture of ethylene glycol and a minor amount of another alkanediol, the trihydric alcohol is mainly tris(2-hydroxyethyl) isocyanurate, the aromatic diamine is mainly methylene dianiline or oxydianiline, and the aromatic diacid is terephthalic acid and the aromatic diester is a di(lower alkyl) terephthalate;

(e) the polyester imide has a molecular weight in the range 700 to 2,000; and

(f) the polyester imide has a hydroxyl number in the range 350 to 450.

2. A polyester imide according to claim 1 characterised in that the hydroxy:carboxy equivalent ratio is from 2.65:1 to 3.67:1.

3. A polyester imide characterised in that the hydroxy:carboxy equivalent ratio is from 2.65:1 to 3.33:1, the trihydric alcohol:dihydric alcohol molar ratio is from 0.4 to 0.5 and the polyester imide contains 42.5 to 50, preferably 45 to 50, equivalent % of imide groups.

4. A polyester imide according to any preceding claim characterised in that the molecular weight is from 750 to 1300, preferably 750 to 1050.

5. A polyester imide according to any preceding claim characterised in that it is a thermosetting polymer and has an acid value of from 0 to 10.

6. A polyester imide according to any preceding claim characterised in that the materials from which it is derived are free of aromatic diacid or diester.

7. A polyester imide according to any of claims 1 to 5 characterised in that the materials from which it is derived include 2 to 7 mol % terephthalic acid.

8. A polyester imide according to any preceding claim characterised in that the materials from which it is derived consist substantially only of ethylene glycol or a mixture of ethylene glycol with a minor amount of

another alkane diol, tris(2-hydroxyethyl) isocyanurate, aromatic diamines selected from methylene dianiline and oxydianiline, trimellitic anhydride and, optionally, terephthalic acid or a diester thereof.

9. A polyester imide according to any preceding claim characterised in that the aromatic diamine is methylene dianiline and X is $CH_2$.

10. A coating composition comprising a solution of polyester imide in a solvent characterised in that the polyester imide is as defined in any of claims 1 to 9.

11. A coating composition according to claim 10 characterised in that the solvent is a non-aqueous organic solvent or an aqueous solvent including sufficient amine to solubilise the polyester imide in the aqueous solvent, and preferably sufficient to give a pH of from 7 to 9.

12. An electrical conductor, preferably a wire, carrying insulation comprising a coating formed by applying and curing a coating composition containing a polyester imide characterised in that the polyester imide is as defined in any of claims 1 to 9 or the composition is as defined in claim 10 or claim 11.

13. A conductor according to claim 12 characterised in that the said polyester imide coating is formed as a base coating direct on the conductor.

14. A conductor according to claim 12 characterised in that the insulation comprises a top coating of the said polyester imide and a base coat of another polyester imide or a polyester, preferably a tris(2-hydroxyethyl) isocyanurate-ethylene glycol-terephthalate polyester.

European Patent Office

**0055085**

Application number

# EUROPEAN SEARCH REPORT

EP 81 30 5928.4

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| Y | US - A - 4 179 423 (LAGANIS et al.)<br>* claims 1, 7, 8, 10, 12, 13; column 1, lines 59 to 68; column 2, lines 10 to 14; column 5, lines 21 to 23; example 2 *<br>-- | 1-4, 8-13 | C 08 G 73/16<br>C 09 D 3/70<br>C 09 D 5/25<br>H 01 B 3/30 |
| Y | US - A - 4 038 254 (SCHADE et al.)<br>* claim 10; column 6, lines 58 to 64; example 5 *<br>-- | 1,7-10, 12 | TECHNICAL FIELDS SEARCHED (Int.Cl. 3) |
| A | DE - B2 - 2 522 386 (CHEMISCHE FABRIK WIEDEKING)<br>* claim 1; example 6 *<br>-- | 1,8,9, 10,12 | C 08 G 73/00<br>C 09 D 3/00<br>C 09 D 5/00<br>H 01 B 3/00 |
| A | US - A - 4 104 221 (JANSSEN et al.)<br>* claims 1, 3; examples 1, 3 *<br>---- | 1,5, 7-12 | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| Berlin | 15-03-1982 | MARX |